# EUROPEAN PATENT APPLICATION

(11) **EP 4 203 332 A1**
(43) Date of publication of application: **28.06.2023**
(21) Application number: 22215840.4
(22) Date of filing: 22.12.2022
(51) Int. Cl.: H04B 3/54, E04H 4/16

(54) **UNDERWATER COMMUNICATION**

(30) Priority: 22.12.2021 US 202163265937 P
(71) Applicant: Maytronics Ltd., 1935000 Kibbutz Yizrael (IL)
(72) Inventor: RACHMAN, Alexander, 3786800 Katzir (IL); KEHATI, Avshalom, 3094336 Zikhron Yaakov (IL)
(74) Representative: Jaeger, Michael David

(57) **Abstract**

A method for underwater communication, the method may include (i) receiving, by a first communication over power cable unit (COPCU), a modulated downstream signal that is a power signal that is modulated by downstream information; wherein the modulated downstream signal is conveyed over a power cable that is at least partially submerged in a pool; wherein the first COPCU is associated with a pool related platform (PRP) , the PRP is located in the pool; (ii) extracting, by the first COPCU, the downstream information; and (iii) locally transmitting, by the first COPCU, the downstream information to a target unit that belongs to the PRP; wherein a distance between the target unit and the first COPCU is a fraction of a length of the power cable.

## Description

### BACKGROUND

Submerged pool cleaning robots - are used in pools and should communicate with devices located outside of the water.

There is a growing need to provide efficient underwater communication with a submerged pool cleaning robot.

### BRIEF DESCRIPTION OF THE DRAWINGS

In order to understand the invention and to see how it may be carried out in practice, a preferred embodiment will now be described, by way of non-limiting example only, with reference to the accompanying drawings.
FIG. 1 is an example of a method;
FIG. 2 is an example of a method;
FIGs. 3A, 3B and 3C are examples of local communication;
FIG. 4 is an example of a pool related platform (PRP) that is a submerged robot, a cable, an external device and their environment;
FIG. 5 is an example of a submerged PRP, a cable, an external device and their environment; and
FIGs. 6-22 illustrate examples of a submerged PRP and an additional submerged module.

### DETAILED DESCRIPTION OF THE DRAWINGS

Any reference to a pool cleaner should be applied, mutatis mutandis, to a method that is executed by a pool cleaner and/or to a non-transitory computer readable medium that stores instructions that once executed by the pool cleaner will cause the pool cleaner to execute the method. Any reference to a Pool Cleaner includes Pool Cleaning Robot or PCR.

Any reference to method should be applied, mutatis mutandis, to a pool cleaner that is configured to execute the method and/or to a non-transitory computer readable medium that stores instructions that once executed by the pool cleaner will cause the pool cleaner to execute the method.

Any reference to a non-transitory computer readable medium should be applied, mutatis mutandis to a method that is executed by a pool cleaner and/or a pool cleaner that is configured to execute the instructions stored in the non-transitory computer readable medium.

The term "and/or" is additionally or alternatively.

A pool cleaning robot is an example for a pool related platform (PRP). The PRP may be, for example, a skimmer, a floating platform, a sanitizing robot, a robot configured to distribute chemical and/or biological within the pool, and the like. For simplicity of explanation various examples will refer to a pool cleaning robot - but any reference to a pool cleaning robot should be applied mutatis mutandis to any other PRP.

There may be provided an underwater communication method, a system capable of underwater communication, and non-transitory computer readable medium for underwater communication.

According to a first embodiment, an external device (for example a power supply device or any other device located out of the water of the pool) may exchange information over a power cable that also feeds a submerged robot with power.

The external device may also communicate (in a wired or wireless manner) with other external devices such as a mobile device, a remote control, a smartphone, a server, a control center, and the like.

Downstream information (for example information carried by radio frequency radiation) from the external device may be provided to first communication over power cable unit (COPCU) that may be a first matching network and/or a first modem. The first COPCU allows power and information to be conveyed over the power cable that is coupled to the submerged robot.

The power cable may be in communication with a second COPCU (for example - a second matching network and/or a second modem) which allows to extract the conveyed information and send the extracted information to one or more recipients within the pool cleaning robot. The second COPCU may belong to the submerged robot and/or may be attached to the submerged robot.

The one or more recipients may be an antenna, an information processing circuit that may preceded the antenna, or any other communication and/or processing element.

The one or more recipients may wirelessly (or by wire) communicate (directly or indirectly) with one or more target unit. The wireless communication may be Bluetooth^{®} compliant - but any other wireless protocols may be used.

The one or more target units may include an add-on functional module unit such as a PCR accessory, such as an add-on functional module, an analyzer, a processor, a memory unit, and the like. The target unit may be another communication unit for transmitting outside the PCR- even to another PRP or other communication unit that is outside the PCR.

The communication between the one or more recipients and the one or more target unit is referred to as local communication.

The local communication may be wireless and may be implemented using acoustic (for example Ultra Sonic) signals, optical signals, RF signals, RFID based, using galvanic connection, Alternating Current signals, and the like.

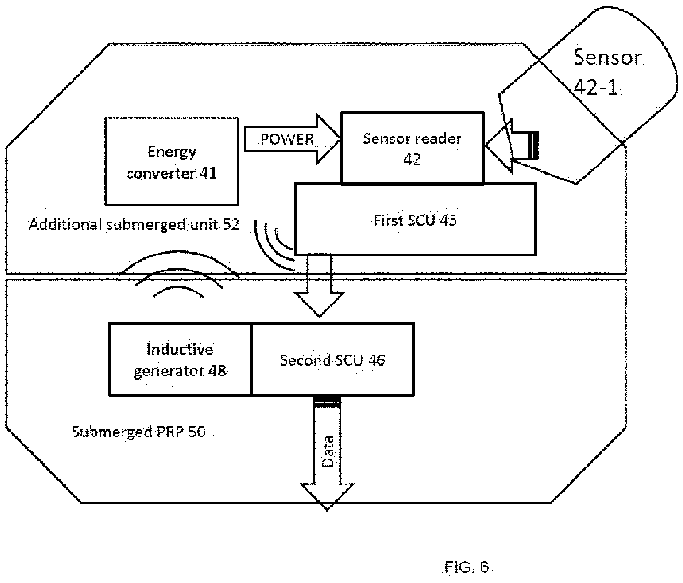

Additional examples of communication between a submerged robot and an add-on functional module are provided in figures 6-22 The same communication can be used between the submerged robot and any element within the pool or in proximity to the pool. In these figures the add-on functional module may be referred to as a "sensor side" and/or the lower part is the robot and the upper part is the add-on functional module.

The one or more recipients and/or the one or more target units may be located within the submerged robot and/or may add-on functional module or accessory.

A recipient may be located in various locations within the submerged robot- for example may be attached to an inner housing of the submerged robot - for example the motor unit housing.

The communication over the power cable may be uni-directional or bi-directional.

When bi-directional, upstream information from the submerged robot (or from any add-on functional module unit) may be sent (a) through the second communication over power cable unit, (b) over the power cable, (c) to the first communication over power cable unit and to (d) to any external target unit located outside the water.

Alternatively - upstream information may use one or more communication over power cable units that are not used for downstream transmission.

A first cord of the cable may be used for upstream transmission while another cord of the cable may be used for downstream transmission.

The same cord of the cable may be used for upstream and downstream transmission.

According to another example - the power cable itself may be used as an antenna and the one or more unit may receive the information the is conveyed by the power cable and transmitted from the power cable.

When the power cable itself is used as an antenna for at least downstream communication - then there may be no need to have the second communication over power cable unit.

When the power cable itself is used as an antenna for downstream communication - then the second communication over power cable unit may not be used for downstream communication.

According to a further example - the power cable or any other RF conveyor may be used for propagating information between different submerged units.

The external device (that sends the downstream information) may also communicate (in a wired or wireless manner) with another external devices such as a mobile device, a remote control, a smartphone, a server, a control center, and the like.

The external device may include an antenna for communicating wirelessly with the other external devices. The external device may elect whether to output information to (a) the first matching network and/or the first information over power communication unit, and/or to (b) the other external device.

The provision of information to (a) or (b) may be implemented by an output switch.

The provision of information to both (a) and (b) can implemented by a splitter.

Providing information to only (a), only (b) or both (a) and (b) may be implemented by a switching network.

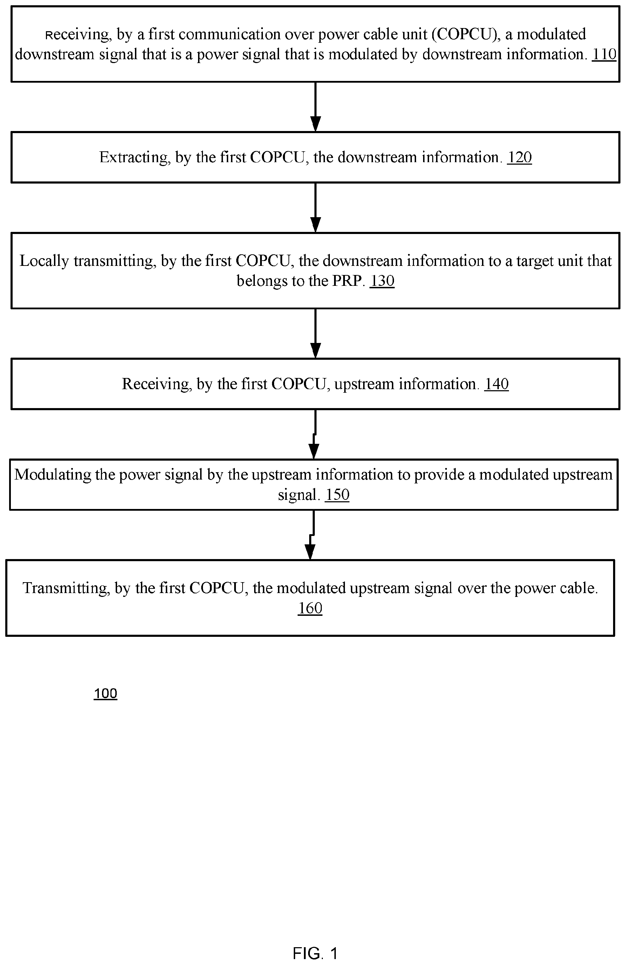

Figure 1 illustrates a method 100 for underwater communication.

Method 100 may start by step 110 of receiving, by a first communication over power cable unit (COPCU), a modulated downstream signal that is a power signal that is modulated by downstream information. The modulated downstream signal is conveyed over a power cable that extends outside a pool. The first COPCU is associated with a pool related platform (PRP) that is located in the pool.

Step 110 may be followed by step 120 of extracting, by the first COPCU, the downstream information.

Step 120 may be followed by step 130 of locally transmitting, by the first COPCU, the downstream information to a target unit that belongs to the PRP. The locally means that the distance between the target unit and the first COPCU is a fraction of a length of the power cable.

The first COPCU may include a submerged PRP radio frequency (RF) filtering circuit for rejecting the power signal - and the step 120 may include rejecting, by the RF filtering circuit the power signal while passing an RF signal that conveys the downstream information.

The power signal may be a direct current (DC) power signal.

The first COPCU may belong to the PRP or may be located outside the PRP.

The communication may be bi-directional.

Accordingly - method 100 may include step 140 of receiving, by the first COPCU, upstream information.

Step 140 may be followed by step 150 of modulating the power signal by the upstream information to provide a modulated upstream signal.

Step 150 may be followed by step 160 of transmitting, by the first COPCU, the modulated upstream signal over the power cable.

It should be noted that the upstream communication may be executed by an additional COPCU and not by the first COPCU. In this case method 100 may include (i) receiving, by an additional COPCU, upstream information; (ii) modulating the power signal by the upstream information to provide a modulated upstream signal; and (iii) transmitting, by the additional COPCU, the modulated upstream signal over the power cable.

While steps 110, 120, 130, 140, 150 and 160 are executed by the PRP, method 100 may include steps executed by an external COPCU. There other steps may be executed regardless of the mentioned above steps of method 100.

The other steps may include at least some of:
a. Receiving, by an external COPCU, downstream information; wherein the external COPCU is located outside the pool.
b. Modulating the power signal by the downstream information to provide the modulated downstream signal.
c. Transmitting, by the external COPCU, the modulated downstream signal over the power cable.
d. Transmitting a downstream information signal that conveys the downstream information, to other units located outside the pool.
e. Using, by the external COPCU, a switching circuitry that is configured to select between (i) conveying a downstream information signal that conveys the downstream information to an external communication unit that communicates with one or more external units, and (ii) conveying the downstream information signal to a modulator of the external COPCU that modulates the power signal by the downstream information signal to provide the modulated downstream signal. The external COPCU may belong to a power supply unit that is located outside the pool.

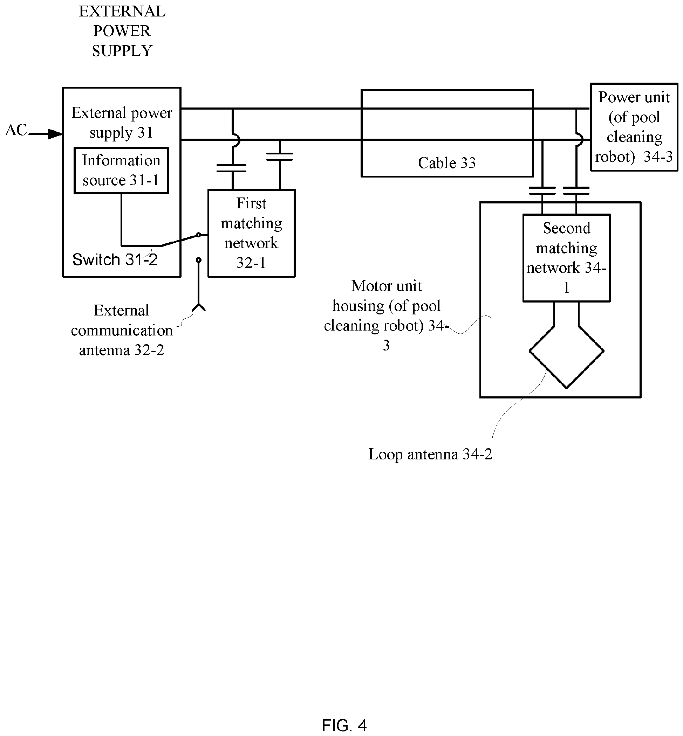

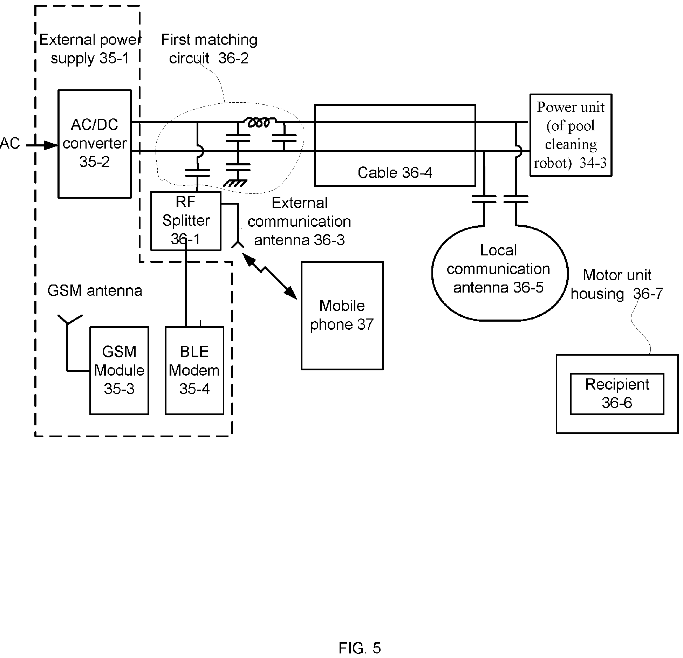

Non limiting examples of COPCU (external COPCU, first COPCU, additional COPCU) include first matching network 23-1 of figure 4, second matching network 34-1 and/or loop antenna 34-2 of figure 1, first matching circuit 36-2 of figure 5, local communication antenna 36-5 and decoupling capacitors of figure 5.

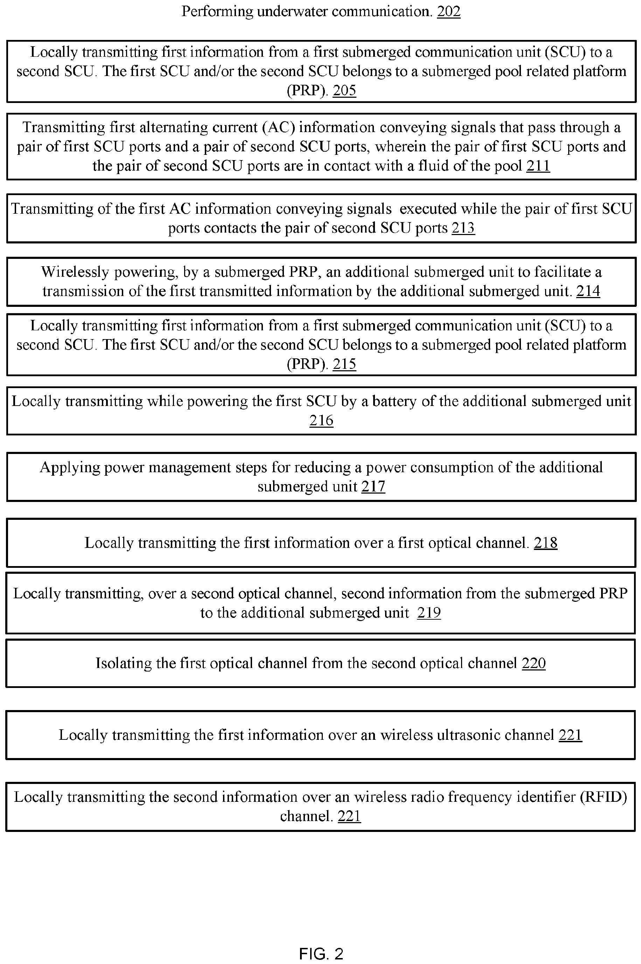

Figure 2 illustrates a method 200 for underwater communication.

Method 200 may include step 202 of performing underwater communication.

Step 202 may include at least one of the following:
a. Step 205 of locally transmitting first information from a first submerged communication unit (SCU) to a second SCU. The first SCU and/or the second SCU belongs to a submerged pool related platform (PRP).
b. Step 211 of transmitting first alternating current (AC) information conveying signals that pass through a pair of first SCU ports and a pair of second SCU ports, wherein the pair of first SCU ports and the pair of second SCU ports are in contact with a fluid of the pool. The first and/or second SCU ports may be made of brass or of other material.
c. Step 212 of transmitting of the first AC information conveying signals executed while the pair of first SCU ports contacts the pair of second SCU ports.
d. Step 213 of locally transmitting by a first SCU that includes a first piezoelectric transmitter that comprises a first membrane. The second SCU includes a second piezoelectric receiver that includes a second membrane. The locally transmitting is executed while the first membrane contacts the second membrane.
e. Step 214 of wirelessly powering, by a submerged PRP, an additional submerged unit to facilitate a transmission of the first transmitted information by the additional submerged unit.
f. Step 215 of locally transmitting second information from the submerged PRP to the additional submerged unit. The wirelessly powering further facilitates the locally transmitting of the second information.
g. Step 216 of locally transmitting while powering the first SCU by a battery of the additional submerged unit.
h. Step 217 of applying power management steps for reducing a power consumption of the additional submerged unit. The applying of the power management steps may include entering the first SCU to a low power mode during low power mode periods when the first SCU does not communicate. The method may include exiting a low power mode when receiving a trigger from the submerged PRP. The trigger may be conveyed over a wireless channel formed between the submerged PRP and the additional submerged unit.
i. Step 218 of locally transmitting the first information over a first optical channel. The first optical channel may include at least one first partially transparent element of the submerged PRP and at least one second partially transparent element of the additional submerged unit.
j. Step 219 of locally transmitting, over a second optical channel, second information from the submerged PRP to the additional submerged unit.
k. Step 220 of isolating the first optical channel from the second optical channel.
l. Step 221 of locally transmitting the first information over an wireless ultrasonic channel.
m. Step 222 of locally transmitting the second information over an wireless radio frequency identifier (RFID) channel.

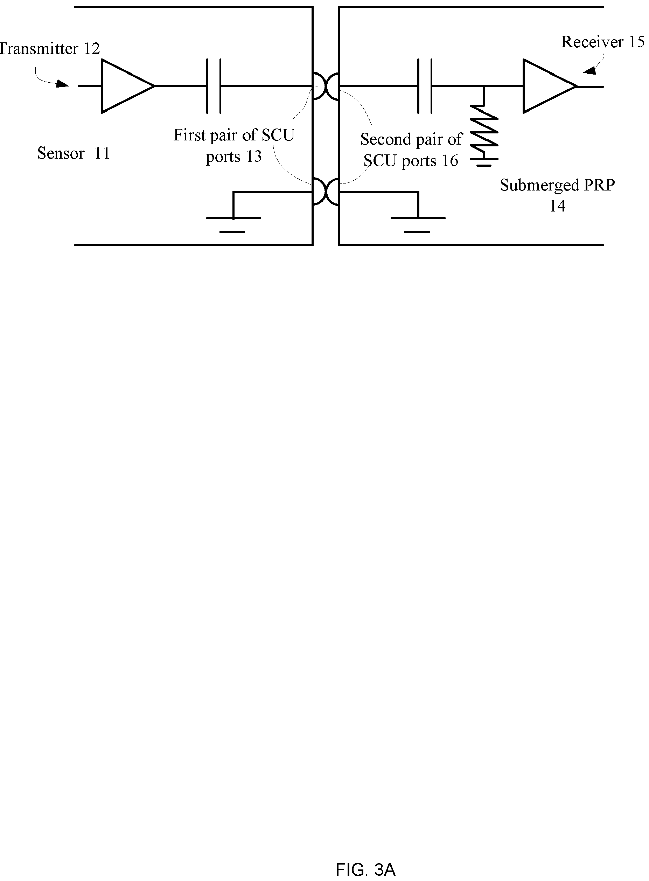

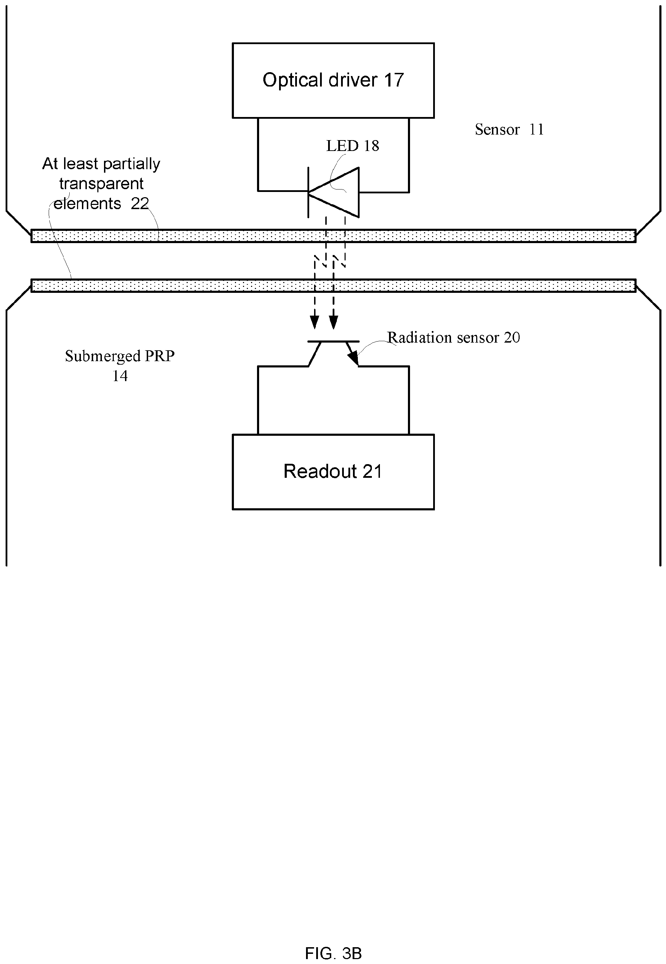

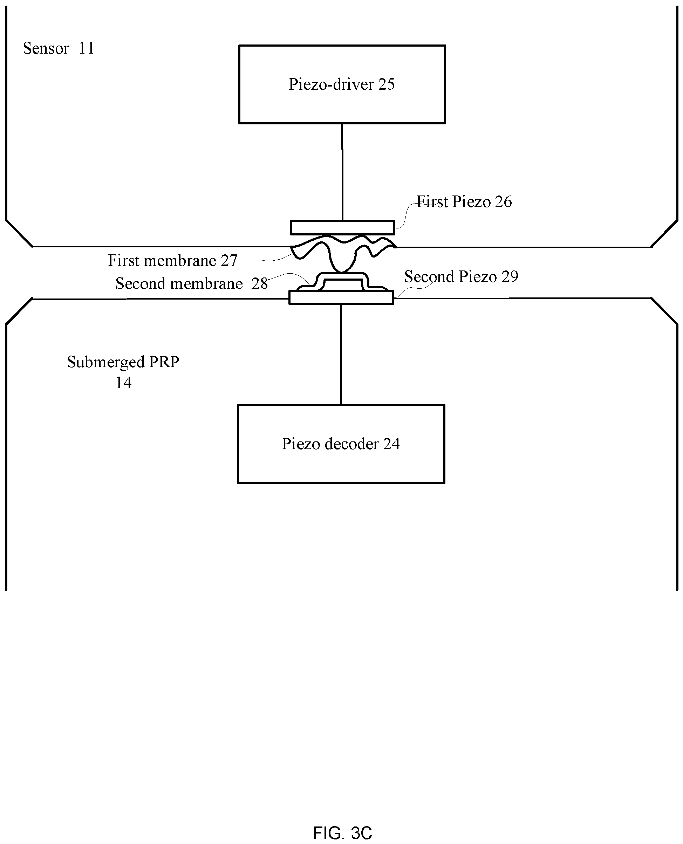

Figures 3A, 3B and 3C illustrate examples of local communication.

Figure 3A illustrates a sensor 11 that is followed by a transmitter 12 in communication with a first pair of SCU ports 13. A submerged PRP 14 includes a receiver 16 in communication with a second pair of SCU ports 16.

Figure 3B illustrates optical communication between LED 18 driven by optical driver 17 (at the second 11 side) and a radiation sensor 20 in communication with readout at the submerged PRP 14 side.

Figure 3C illustrates a sensor 11 side that include a piezo-driver 25 that drives first piezo that vibrated first membrane 27. The first membrane 27 is in contact with a second membrane 28 in communication with a second piezo 29 in communication of piezo decoder 24 of the submerged PRP.

Figure 4 illustrates an example in which:
a. The external device is an external power supply 31.
b. The external power supply includes an information source 31-1 that has a switch 31-2 for outputting information to the first matching network 32-1 or to an external communication antenna 32-2 (2.4Ghz antenna) for wirelessly communicating with another external device (such as a smartphone). The switch 31-2 may be replaced by a coupler or a switching network).
c. The submerged robot is a pool cleaning robot.
d. A power unit 34-3 (of the pool cleaning unit) may receive the power over the cable 33.
e. The second matching network 34-1 may be in communication with a RF antenna - for example - a loop antenna 34-2 (may operate at 2.4 Ghz). The loop antenna may be included in the pool cleaning robot or in an add on unit. When included in the pool cleaning robot may the loop antenna may locally communicate with an add-on functional module (having its own 2.4Gha loop antenna). In figure 4 the second matching network and the loop antenna are illustrated as being located within a motor unit housing 34-3 of the pool cleaning robot.

Figure 5 illustrates another example of communication - both local and external.

In figure 5:
a. The external device is an external power supply 35-1 that include an AC to DC converter 35-2 that converts an AC power signal to a DC power signal.
b. The external power supply includes an information source 31-1 that has a switch 31-2 for outputting information to the first matching network 32-1 (that include capacitors and inductor) or to an external communication antenna 32-2 (2.4Ghz antenna) for wirelessly communicating with another external device (such as a mobile phone 37). The switch 31-2 may be replaced by a coupler or a switching network).
c. The submerged robot is a pool cleaning robot.
d. A power unit of the pool cleaning unit 34-3 may receive the power over the cable 36-4.

The second matching network is illustrated as including decoupling capacitors 36-8 and is electrically coupled to local communication antenna 36-5 that communicates with recipient 36-6 located within the motor unit housing.

The recipient may be located outside the PRP and may include any element or unit within the pool - even another PRP of any type, submerged communication relays, and the like.

Figures 6-22 illustrate examples of a submerged PRP and an additional submerged module. The submerged PRP may be spaced apart from the additional submerged module. The submerged PRP may contact the additional submerged module. The additional submerged module may be connected and/or detachable connected from the submerged PRP.

The additional submerged unit 52 may be an add on unit, may be connected to the submerged PRP, may be spaced apart from the submerged PRP, may be another PRP.

There may be provided any combination of any of the additional submerged units and/or any of the components of any of the additional submerged units illustrated in any one of figures 6-22.

There may be provided any combination of any of the submerged PRP and/or any of the components of any of the submerged PRP illustrated in any one of figures 6-22.

There may be provided any combination of any unit and/or component and/or PRP illustrated in any one of figured 3A-22. For example, a submerged PRP may include one or more COPCUs and communicate over a cable and may also communicate with an additional submerged module.

The additional submerged unit 52 of figures 6-22 included a sensor that extended from a housing of the additional submerged unit 52. It should be noted that the additional submerged unit 52 may have one or more sensors that do not extend from the housing, and that the additional submerged unit 52 may not include any sensor.

The additional submerged unit 52 may be an add on unit, may be connected to the submerged PRP, may be spaced apart from the submerged PRP, may be another PRP.

Figure 6 illustrates an inductive generator 48 that wirelessly outputs radiation to the additional submerged unit 52. An energy converter 41 converts the radiation to energy (or power) that powers a sensor reader 42 (for reading the signals of sensor 42-1), powers the sensor and powers a first SCU 45 that wirelessly transmits information to second SCU 46 of the submerged PRP.

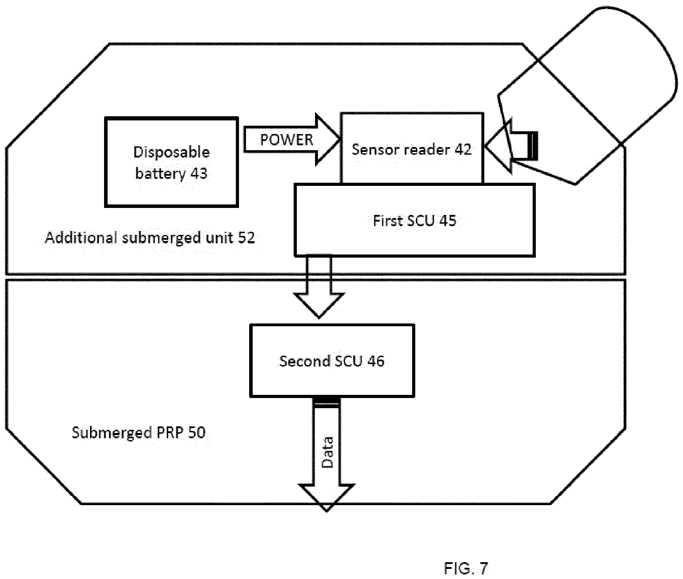

Figure 7 illustrates a disposable battery 43 of the additional unit 52, that powers a sensor reader 42 (for reading the signals of sensor 42-1), powers the sensor and powers a first SCU 45 that wirelessly transmits information to second SCU 46 of the submerged PRP 50.

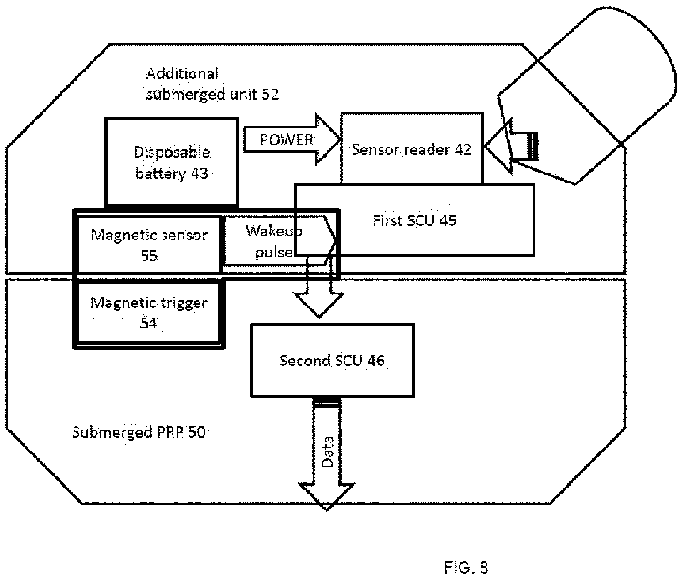

Figure 8 illustrates a disposable battery 43 of the additional submerged unit 52, that powers a sensor reader 42 (for reading the signals of sensor 42-1), powers the sensor and powers a first SCU 45 that wirelessly transmits information to second SCU 46 of the submerged PRP 50. The additional submerged unit 52 received a magnetic trigger from magnetic trigger unit 54, whereas the magnetic trigger is sensed by magnetic sensor 55 that wake up the first SCU 45 and may also wake up the sensor reader and the sensor. The magnetic trigger may be generated while the magnetic trigger unit 54 is proximate to the magnetic sensor 55. Or may be generated from time to time- according to any timing schedule.

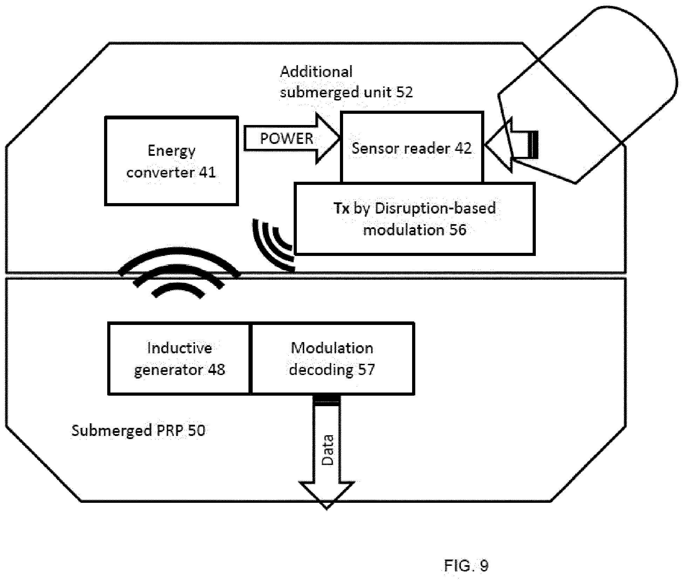

Figure 9 illustrates an inductive generator 48 that wirelessly outputs radiation to the additional submerged unit 52. An energy converter 41 converts the radiation to energy (or power) that powers a sensor reader 42 (for reading the signals of sensor 42-1), powers the sensor and powers a transmission by disruption based modulation unit 56 that wirelessly transmits information to modulaiton decoding 57 of the submerged PRP.

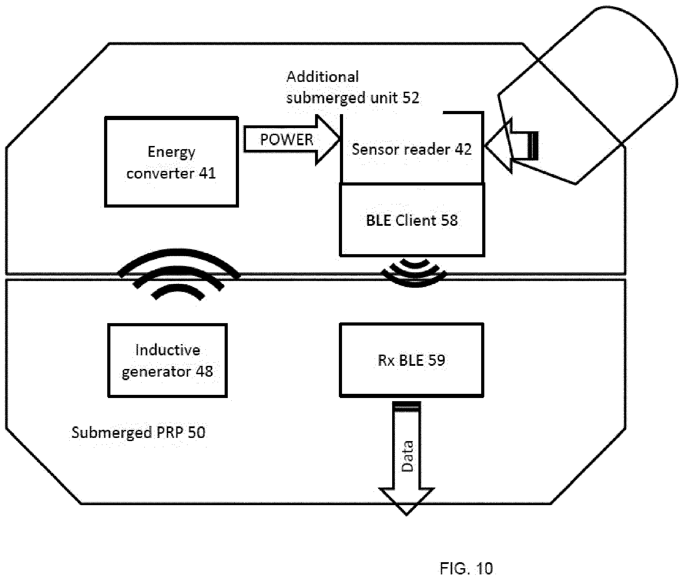

Figure 10 illustrates an inductive generator 48 that wirelessly outputs radiation to the additional submerged unit 52. An energy converter 41 converts the radiation to energy (or power) that powers a sensor reader 42 (for reading the signals of sensor 42-1), powers the sensor and powers a BLE client 58 that wirelessly transmits information to receive (Rx) BLE unit 59 of the submerged PRP.

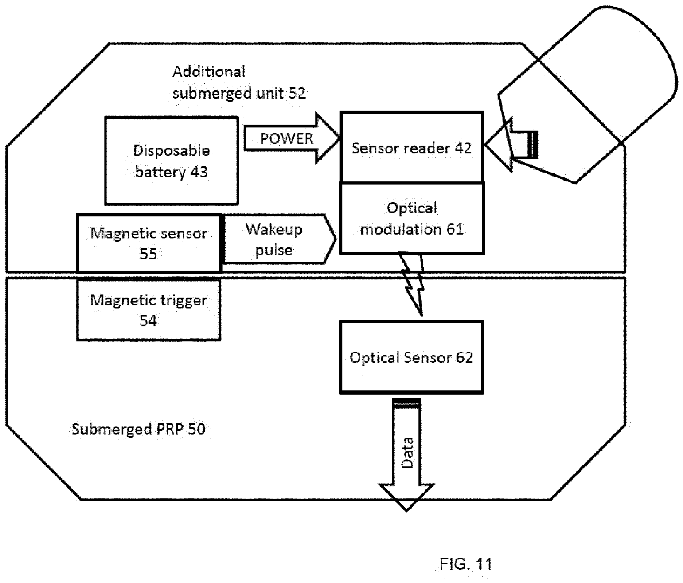

Figure 11 illustrates a disposable battery 43 of the additional submerged unit 52, that powers a sensor reader 42 (for reading the signals of sensor 42-1), powers the sensor and powers an optical modulator 61 that optically transmits information to optical sensor 62 of the submerged PRP 50. The additional submerged unit 52 received a magnetic trigger from magnetic trigger unit 54, whereas the magnetic trigger is sensed by magnetic sensor 55 that wake up the first SCU 45 and may also wake up the sensor reader and the sensor. The magnetic trigger may be generated while the magnetic trigger unit 54 is proximate to the magnetic sensor 55. Or may be generated from time to timeaccording to any timing schedule.

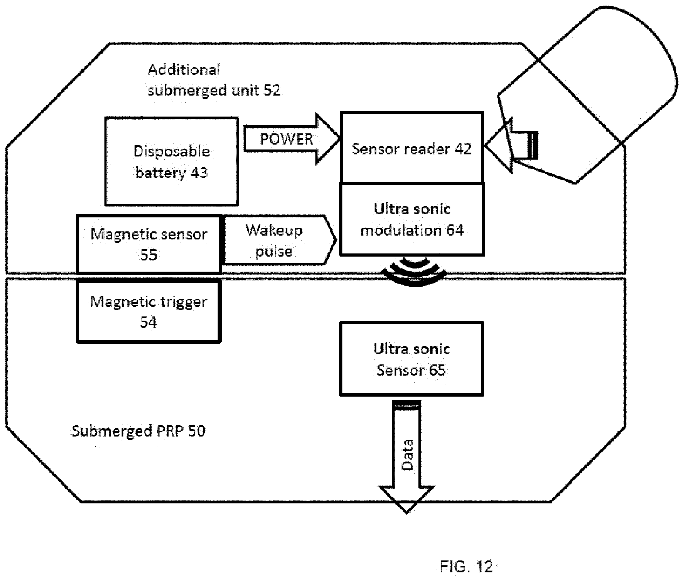

Figure 12 illustrates a disposable battery 43 of the additional submerged unit 52, that powers a sensor reader 42 (for reading the signals of sensor 42-1), powers the sensor and powers an ultrasonic modulator 64 that wirelessly transmits information to ultra sonic sensor 65 of the submerged PRP 50. The additional submerged unit 52 received a magnetic trigger from magnetic trigger unit 54, whereas the magnetic trigger is sensed by magnetic sensor 55 that wake up the first SCU 45 and may also wake up the sensor reader and the sensor. The magnetic trigger may be generated while the magnetic trigger unit 54 is proximate to the magnetic sensor 55. Or may be generated from time to time- according to any timing schedule.

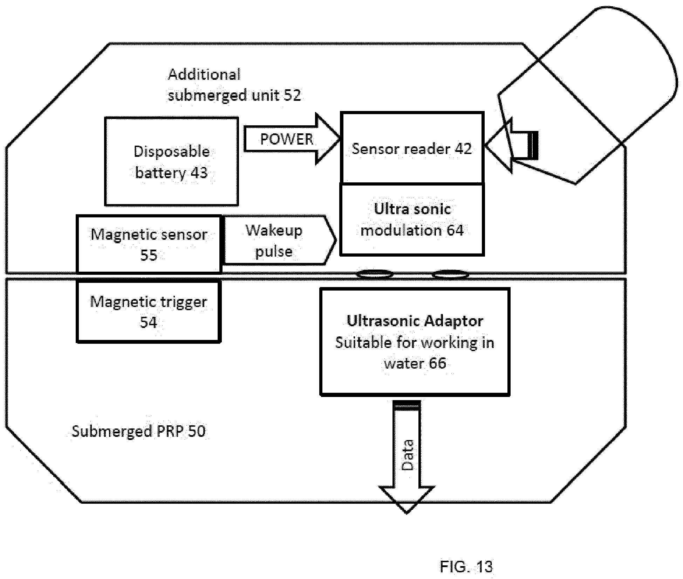

Figure 13 illustrates a disposable battery 43 of the additional submerged unit 52, that powers a sensor reader 42 (for reading the signals of sensor 42-1), powers the sensor and powers an ultrasonic modulator 64 that wirelessly transmits information to ultra sonic adaptor 66 of the submerged PRP 50. The additional submerged unit 52 received a magnetic trigger from magnetic trigger unit 54, whereas the magnetic trigger is sensed by magnetic sensor 55 that wake up the first SCU 45 and may also wake up the sensor reader and the sensor. The magnetic trigger may be generated while the magnetic trigger unit 54 is proximate to the magnetic sensor 55. Or may be generated from time to time- according to any timing schedule.

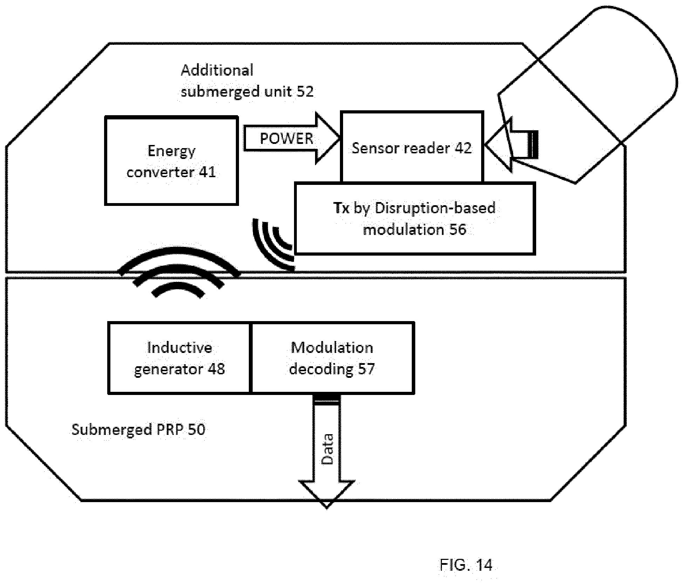

Figure 14 illustrates an inductive generator 48 that wirelessly outputs radiation to the additional submerged unit 52. An energy converter 41 converts the radiation to energy (or power) that powers a sensor reader 42 (for reading the signals of sensor 42-1), powers the sensor and powers a transmission by disruption based modulation 56 that wirelessly transmits information to modulation decoder 57 of the submerged PRP.

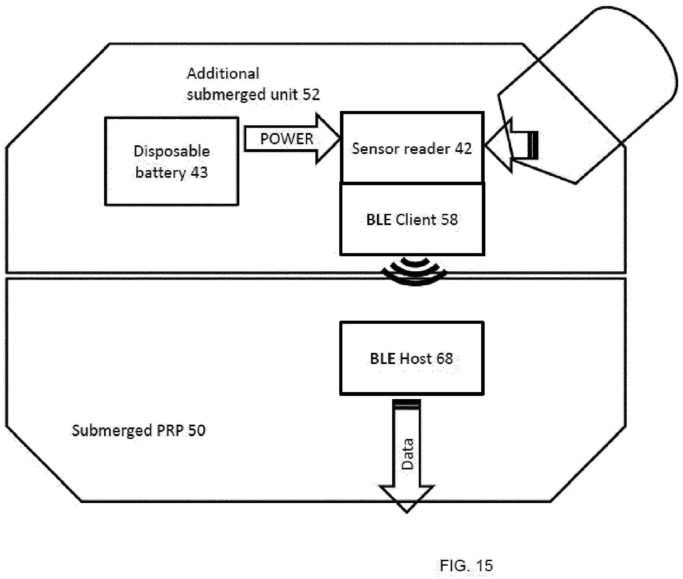

Figure 15 illustrates a disposable battery 43 that powers a sensor reader 42 (for reading the signals of sensor 42-1), powers the sensor and powers a BLE client 58 that wirelessly transmits information to receive (Rx) BLE unit 59 of the submerged PRP.

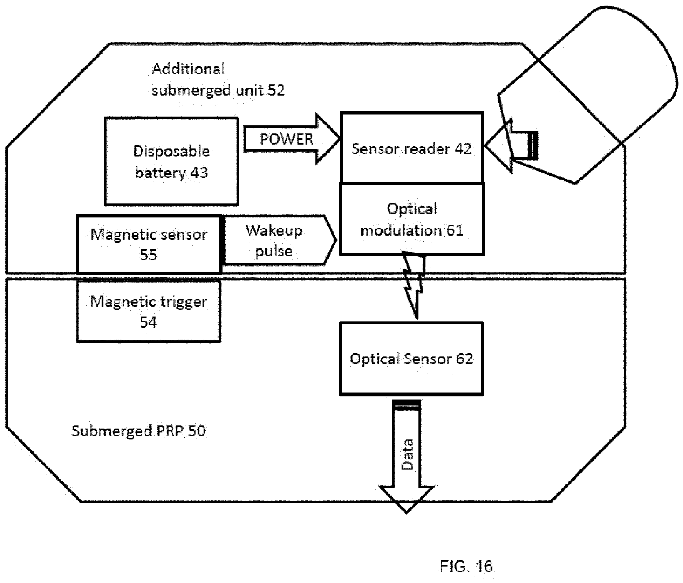

Figure 16 illustrates a disposable battery 43 of the additional submerged unit 52, that powers a sensor reader 42 (for reading the signals of sensor 42-1), powers the sensor and powers an optical modulator 61 that optically transmits information to optical sensor 62 of the submerged PRP 50. The additional submerged unit 52 received a magnetic trigger from magnetic trigger unit 54, whereas the magnetic trigger is sensed by magnetic sensor 55 that wake up the first SCU 45 and may also wake up the sensor reader and the sensor. The magnetic trigger may be generated while the magnetic trigger unit 54 is proximate to the magnetic sensor 55. Or may be generated from time to timeaccording to any timing schedule.

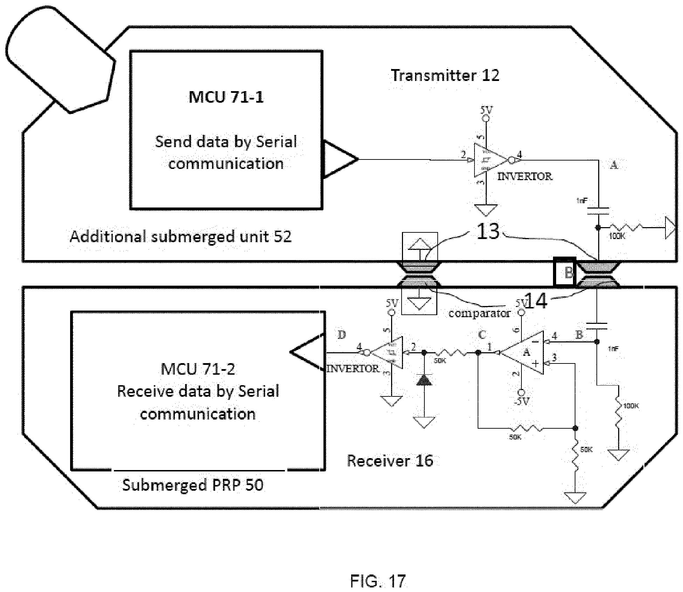

Figure 17 illustrates an additional submerged unit 52 that includes a first main communication unit (MCU) 71-1 that is in communication with transmitter 12 in communication with a first pair of SCU ports 13. A submerged PRP 50 includes a second pair of SCU ports 16 (that contact the first pair of SCU ports) in communication with a receiver 15 and a second MSC 71-2.

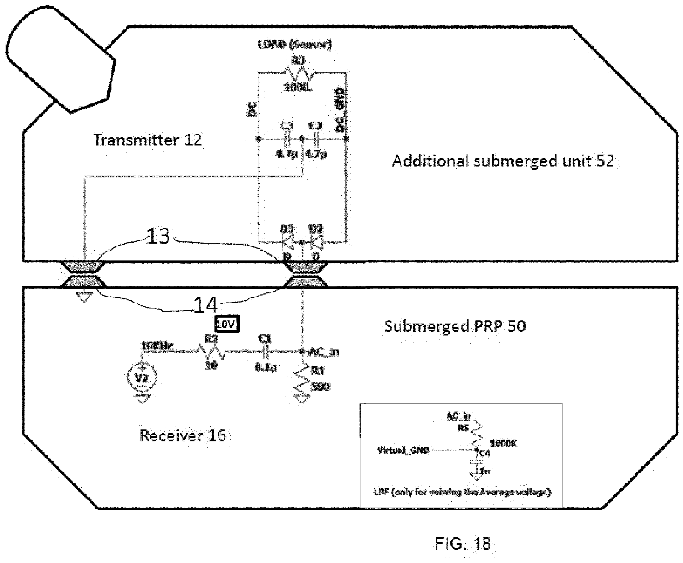

Figure 18 illustrates an additional submerged unit 52 that includes a first main communication unit (MCU) 71-1 that is in communication with transmitter 12 in communication with a first pair of SCU ports 13. A submerged PRP 50 includes a second pair of SCU ports 16 (that contact the first pair of SCU ports) in communication with a receiver 15 and a second MSC 61-2.

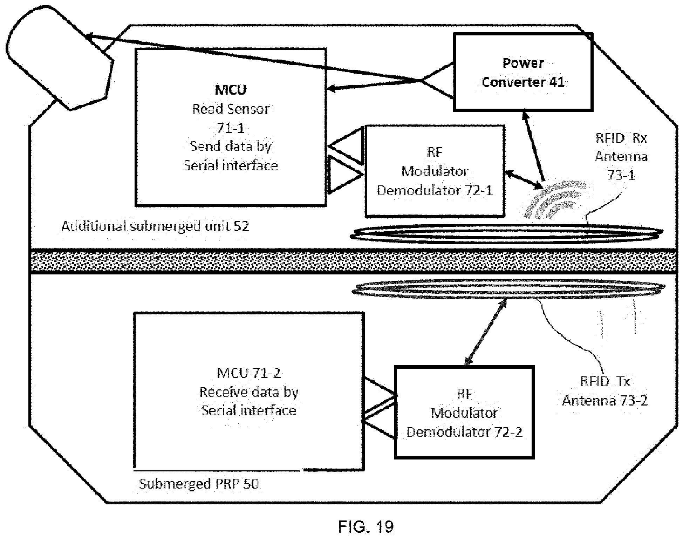

Figure 19 illustrates a submerged PRP 50 that includes a second MCU 71-2 that is in communication with second RF modulator/demodulator 72-2 that feeds RFID transmit antenna 73-2 that transmits radiation that is received by receive RFID antenna 72-1 that is used to power (using a power converter 41) the additional submerged unit 52. Information conveying signals from the receive RFID antenna 72-1 is sent to first RF modulator/demodulator 72-1 that is in communication with first MSU 71-1. Two directional communication may be applied.

There may be provided a medium 79 that is connected between the additional submerged module and the submerged PRP that is made of a waterproof elastic pad that include air bubbles - whereas the pad exhibits improved RF conductivity.

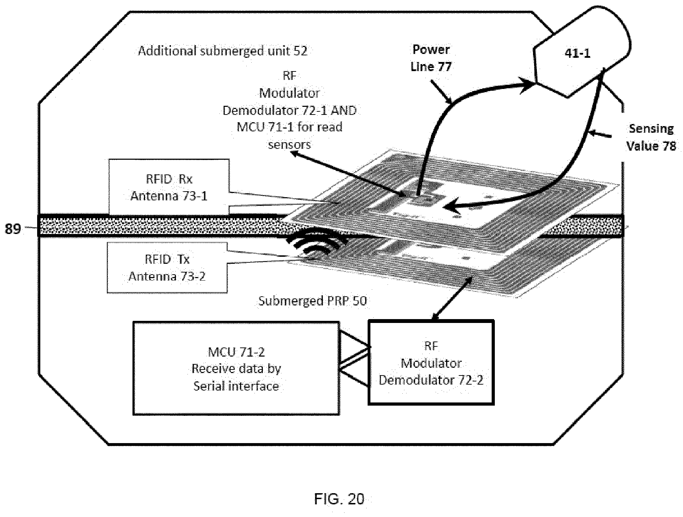

Figure 20 illustrates a submerged PRP 50 that includes a second MCU 71-2 that is in communication with second RF modulator/demodulator 72-2 that feeds RFID transmit antenna 73-2 that transmits radiation that is received by receive RFID antenna 72-1 that is used to power (see for example power line 77 that feeds sensor 41-1) the additional submerged unit 52. Information conveying signals from the receive RFID antenna 72-1 is sent to a combination of first RF modulator/demodulator 72-1 an first MSU 71-1. Two directional communication may be applied. For example - a sensing value 78 from the sensor may be sent to the combination of first RF modulator/demodulator 72-1 an first MSU 71-1 and eventually sent, for example using RFID communication to the submerged PRP 50.

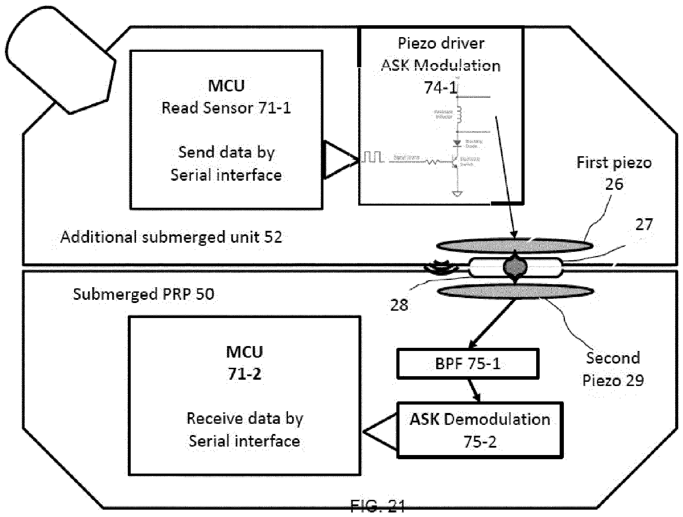

Figure 21 illustrates an additional submerged unit 52 that includes a sensor, a first MCU 71-1 that is in communication with piezo driver ask modulator 74-1 that drives first piezo 26 that moves first membrane 27 that is in contact (for example contact by its central portion) with second membrane 28 that is in communication with second piezo 29, that is followed by band pass filter (BPF 75-1) that is followed by ASK demodulator 75-2, and second MCU 71-2.

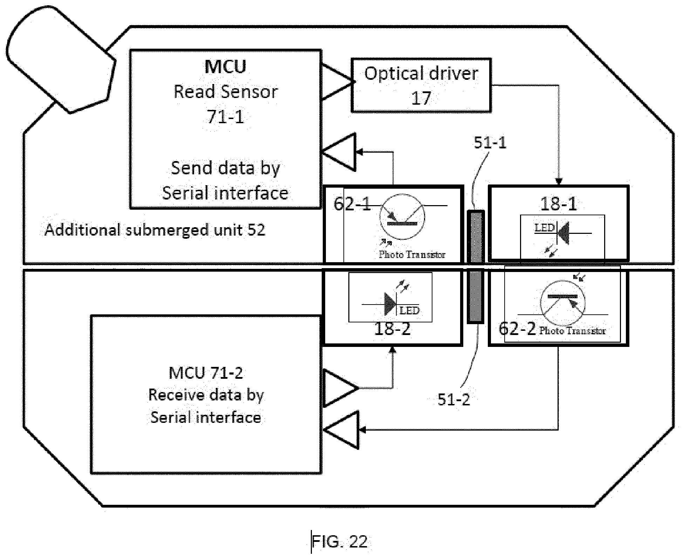

Figure 22 illustrates bi-directional optical communication between the additional submerged unit 52 and the submerged PRP 50.

First MCU 71-1 is in communication with optical driver 17 that drivers first LED 18-1 for transmission from additional submerged unit 52 and the submerged PRP 50. The first MCU 71-1 is also in communication with first optical sensor 62-1 for receiving optical transmission from second LED 18-2 of the submerged PRP 50.

Second MCU 71-2 is in communication with another optical driver (not shown) that drivers second LED 18-2 for transmission to additional submerged unit 52 and from submerged PRP 50. The second MCU 71-2 is also in communication with second optical sensor 62-2 for receiving optical transmission from first LED 18-1 of the additional submerged unit 52.

The following reference numbers are used in the various figures:

| # | Name |
|---|---|
| 11 | Sensor |
| 12 | Transmitter |
| 13 | First pair of SCU ports |
| 14 | Submerged PRP |
| 15 | Receiver |
| 16 | Second pair of SCU ports |
| 17 | Optical driver |
| 18, 18-1, 18-2 | LED |
| 19 | Readout |
| 20 | Radiation sensor |
| 22 | At least partially transparent elements |
| 24 | Piezo decoder |
| 25 | Piezo-driver |
| 26 | First piezo |
| 27 | First membrane |
| 28 | Second membrane |
| 29 | Second piezo |
| 31 | External power supply |
| 31-1 | Information source |
| 31-2 | switch |
| 32-1 | First matching network |
| 32-2 | External communication antenna |
| 33 | Cable |
| 34-1 | Second matching network |
| 34-2 | Loop antenna |
| 34-3 | Power unit of pool cleaning robot |
| 35-1 | External power supply |
| 35-2 | AC/DC converter |
| 35-3 | GSM module |
| 35-4 | BLE modem 35-4 |
| 36-1 | RF splitter |
| 36-2 | First matching circuit |
| 36-3 | External communication antenna |
| 36-4 | Cable |
| 36-5 | Local communication antenna |
| 36-6 | Recipient |
| 36-7 | Motor unit housing |
| 37 | Mobile phone |
| 41 | Energy converter |
| 42 | Sensor reader |
| 42-1 | Sensor |
| 43 | Battery |
| 45 | First SCU |
| 46 | Second SCU |
| 48 | Inductive generator |
| 50 | Submerged PRP |
| 51-1, 51-2 | Optical channel isolators |
| 52 | Additional submerged unit |
| 54 | Magnetic trigger |
| 55 | Magnetic sensor |
| 56 | TX by disruption- based modulation |
| 57 | Modulation decoding |
| 58 | BLE client |
| 59 | BLE receiver |
| 61 | Optical modulator / optical transmitter |
| 62, 62-1, 62-2 | Optical sensor |
| 64 | Ultrasonic modulator |
| 65 | Ultrasonic sensor |
| 66 | Ultrasonic adaptor |
| 71-1 | First MCU |
| 71-2 | Second MCU |
| 72-1 | First RF modulator / demodulator |
| 72-2 | Second RF modulator / demodulator |
| 73-1 | RFID receive antenna |
| 73-2 | RFID transmit antenna |
| 74-1 | Piezo driver ASK modulation |
| 75-1 | Band pass filter |
| 75-2 | ASK demodulator |
| 77 | Power line |
| 78 | Sensed value |
| 79 | Medium |

The phrase "may be X" indicates that condition X may be fulfilled. This phrase also suggests that condition X may not be fulfilled. For example - any reference to a submerged robot as including a certain component should also cover the scenario in which the submerged robot does not include the certain component. For example - any reference to a method as including a certain step should also cover the scenario in which the method does not include the certain component. Yet for another example - any reference to a submerged robot that is configured to perform a certain operation should also cover the scenario in which the submerged robot is not configured to perform the certain operation.

The terms "including", "comprising", "having", "consisting" and "consisting essentially of" are used in an interchangeable manner. For example- any method may include at least the steps included in the figures and/or in the specification, only the steps included in the figures and/or the specification. The same applies to the submerged robot and the mobile computer.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

Any system, apparatus or device referred to this patent application includes at least one hardware component.

## Claims

1. A method for underwater communication, the method comprising:
receiving, by a first communication over power cable unit (COPCU), a modulated downstream signal that is a power signal that is modulated by downstream information; wherein the modulated downstream signal is conveyed over a power cable that is at least partially submerged in a pool;
wherein the first COPCU is associated with a pool related platform (PRP), the PRP is located in the pool;
extracting, by the first COPCU, the downstream information; and
locally transmitting, by the first COPCU, the downstream information to a target unit that belongs to the PRP; wherein a distance between the target unit and the first COPCU is a fraction of a length of the power cable.

2. The method according to claim 1, wherein the first COPCU comprises a submerged PRP radio frequency (RF) filtering circuit for rejecting the power signal.

3. The method according to claim 1, wherein the power signal as a direct current (DC) power signal.

4. The method according to claim 1, wherein the first COPCU belongs to the PRP.

5. The method according to claim 1, wherein the first COPCU is located outside the PRP.

6. The method according to claim 1, comprising:
receiving, by the first COPCU, upstream information;
modulating the power signal by the upstream information to provide a modulated upstream signal; and
transmitting, by the first COPCU, the modulated upstream signal over the power cable.

7. The method according to claim 1, comprising:
receiving, by an additional COPCU, upstream information;
modulating the power signal by the upstream information to provide a modulated upstream signal; and
transmitting, by the additional COPCU, the modulated upstream signal over the power cable.

8. The method according to claim 1 wherein the receiving of the modulated downstream signal is preceded by:
receiving, by an external COPCU, downstream information; wherein the external COPCU is located outside the pool;
modulating the power signal by the downstream information to provide the modulated downstream signal; and
transmitting, by the external COPCU, the modulated downstream signal over the power cable.

9. The method according to claim 8, comprising transmitting a downstream information signal that conveys the downstream information, to other units located outside the pool.

10. The method according to claim 8, wherein the external COPCU comprises a switching circuitry that is configured to select between (i) conveying a downstream information signal that conveys the downstream information to an external communication unit that communicates with one or more external units, and (ii) conveying the downstream information signal to a modulator of the external COPCU that modulates the power signal by the downstream information signal to provide the modulated downstream signal.

11. The method according to claim 8, wherein the external COPCU belongs to a power supply unit that is located outside the pool.

12. The method according to claim 1, wherein the PRP is a pool cleaning robot.

13. A non-transitory computer readable medium for underwater communication, the non-transitory computer readable medium stores instructions for:
receiving, by a first communication over power cable unit (COPCU), a modulated downstream signal that is a power signal that is modulated by downstream information; wherein the modulated downstream signal is conveyed over a power cable that is at least partially submerged in a pool ;
wherein the first COPCU is associated with a pool related platform (PRP), the PRP is located in the pool;
extracting, by the first COPCU, the downstream information; and
locally transmitting, by the first COPCU, the downstream information to a target unit that belongs to the PRP; wherein a distance between the target unit and the first COPCU is a fraction of a length of the power cable.

14. A pool related platform (PRP) having underwater communication capabilities, the PRP comprising:
a first communication over power cable unit (COPCU) that is configured to:
receive a modulated downstream signal that is a power signal that is modulated by downstream information; wherein the modulated downstream signal is conveyed over a power cable that is at least partially submerged in a pool;
extract the downstream information; and
locally transmit the downstream information to a target unit that belongs to the PRP; wherein a distance between the target unit and the first COPCU is a fraction of a length of the power cable.

15. The PRP according to claim 14, wherein the first COPCU comprises a submerged PRP radio frequency (RF) filtering circuit for rejecting the power signal.
